# EUROPÄISCHE PATENTANMELDUNG

(11) **EP 1 593 876 A2**
(43) Veröffentlichungstag der Anmeldung: **09.11.2005**
(21) Anmeldenummer: 05008946.5
(22) Anmeldetag: 23.04.2005
(51) Int. Cl.: F16G 1/08, F16G 5/06

(54) **Kraftübertragungsriemen und Verfahren zu dessen Herstellung**

(30) Priorität: 03.05.2004 DE 102004021524
(71) Anmelder: Arntz Beteiligungs GmbH & Co. KG, 37671 Höxter (DE)
(72) Erfinder: Ballhausen, Ulrich, Dr., 33014 Bad Driburg (DE); Amash, Ali, Dr., 30459 Hannover (DE)
(74) Vertreter: Sroka, Peter-Christian

(57) **Zusammenfassung**

Ein Kraftübertragungsriemen aus gummi-elastischem Material, in das eine Zugträgerlage (3) und zur Erzielung einer Quersteifigkeit des Riemens mehrere jeweils auf eine gummiartige Einbettungsfolie aufgebrachte oder in eine gummiartige Matrix eingebettete Gewebelagen (4) eingebracht sind, von denen jede aus sich gewebeartig kreuzenden Fäden besteht, wobei eine erste Fadengruppe durch im wesentlichen senkrecht zur Riemenlaufrichtung ausgerichtete Fäden aus einem Material mit hoher Festigkeit, hoher Biegesteifigkeit und hoher Temperaturbeständigkeit gebildet ist, während eine zweite Fadengruppe aus in Riemenlaufrichtung ausgerichteten Fäden aus einem Material mit demgegenüber geringerer Festigkeit und geringerer Temperaturbeständigkeit besteht, ist dadurch gekennzeichnet, dass die Fäden der ersten Fadengruppe die Schussfäden und die Fäden der zweiten Fadengruppe die Kettfäden der Gewebelagen (4) bilden.

## Beschreibung

Die Erfindung betrifft Kraftübertragungsriemen. insbesondere in Form von Kraftbändern, Keilriemen, Keilrippenriemen, Breitkeilriemen und dergleichen, und ein Verfahren zur Herstellung solcher Kraftübertragungsriemen.

Derartige Kraftübertragungsriemen bestehen gemäß Oberbegriff des Patentanspruchs 1 in der Regel aus gummielastischem Material, in das eine Zugträgerlage und zur Erzielung einer Quersteifigkeit des Riemens mehrere, bevorzugt aus sich gewebeartig kreuzende Fäden bestehende Gewebelagen eingebracht sind, die in der Regel auf eine gummiartige Einbettungsfolie aufgebracht oder in anderer Form mit einer gummiartigen Trägermatrix versehen sind, wobei eine erste Fadengruppe aus im wesentlichen senkrecht zur Riemenlaufrichtung ausgerichteten Fäden aus einem Material mit hoher Festigkeit, hoher Biegesteifigkeit und hoher Temperaturbeständigkeit besteht, während die zweite Fadengruppe aus im wesentlichen in Riemenlaufrichtung ausgerichteten Fäden aus einem Material mit demgegenüber geringerer Festigkeit und/oder geringerer Temperaturbeständigkeit besteht.

Bei einem in der DE 102 03 015 A1 beschriebenen, mit einer Zugträgerlage aus gewickelten Corden versehenen Keilriemen aus einem thermoplastischen Elastomer ist unterhalb der Zugträgerlage zum Abstützen derselben während des Herstellungsprozesses eine Stützgewebelage vorgesehen. Als Stützgewebe der Gewebelage ist ein offenes Gewebe in Leinenbindung vorgesehen mit in üblicher Weise rechtwinklig gekreuzten Kett- und Schussfäden. Die Kettfäden dieser Stützgewebelage verlaufen in Laufrichtung des Keilriemens, während die senkrecht zur Riemenlaufrichtung ausgerichteten Schussfäden beidseitig offen endend gegenüber den äußersten Kettfäden seitliche Überstände aufweisen, die etwa rechtwinklig zur Laufrichtung des Keilriemens zur Breitseite der Riemenbasis hin abgebogen. Dadurch sind im wesentlichen seitliche Abstützungen für die äußersten Corde der Zugträgerlage gebildet. Die senkrecht zur Riemenlaufrichtung ausgerichteten, mit ihren Enden nach oben abgewinkelten Fäden enden im Abstand von den Keilriemenflanken. Als Kettfäden und/oder als Schussfäden sind multifile Garne oder monofile Drähte aus einem temperaturbeständigen Material genannt, wobei eine Temperaturbeständigkeit ab 250 °C gegeben sein soll. Neben Drähten aus Metallen werden auch Drähte bzw. Garne aus Kunststoff vorgeschlagen. Als Kettfäden und auch als Schussfäden sind solche aus Baumwolle oder Aramid vorgesehen. Diese Materialien sollen zumindest für die Zeit der Herstellung den Temperaturen des aufgeschmolzenen Elastomers widerstehen. Diese eine geringere Temperaturbeständigkeit aufweisende Gruppe von Fäden haben damit im wesentlichen die Funktion einer Verbindungshilfe für die Fäden der anderen Gruppe.

Kraftübertragungsriemen werden aus verschiedenen flexiblen gummiartigen Materialien gefertigt. Dabei kommen Kautschuke (Gummi), wie auch andere flexible Materialien, wie z. B. vernetzbare Polymere, zum Einsatz. Als Zugträger kommen Materialien aus Polyester, Polyamid, Aramid, Glas und andere zur Anwendung.

Zur Erzielung einer Quersteifigkeit werden Verteifungselemente in Form von Heftcordgeweben in die Riemenmatrix eingebracht. Diese Versteifungselemente bestehen in der Regel aus zu Geweben zusammengefassten Corden. Diese Corde bestehen aus cablierten oder gezwirnten Einzelfäden aus zum Beispiel Polyamid oder Polyester, die zur Erzielung einer besseren Anbindung an die Matrix mit Haftvermittlern ausgerüstet sind. Die Corde werden dabei in der Regel in Kettrichtung verarbeitet. Die in Schussrichtung verlaufenden Heftfäden bestehen in der Regel aus dünnen einfachen oder gezwirnten Fäden aus Baumwolle oder Kunstfasern und deren Mischungen, da sie lediglich den Zusammenhalt des Verbundes der Cordfäden dienen.

Heftcordgewebe werden generell in Keilriemen, vorrangig in flankenoffenen Breitkeilriemen in Form von bis zu acht oder mehr Gewebelagen, die jeweils auf eine gummiartige Einbettungsfolie zur Bildung von doublierten Lagen aufgebracht werden, eingesetzt, um die Querstabilität derartiger Breitkeilriemen oder Keilrippenriemen deutlich zu steigem. Diese Querstabilität ist ein wichtiger Faktor zur Festlegung der Belastungsgrenze eines Riemens und somit seiner Lebensdauer.

Die üblichen Ausführungen von Heftcordgeweben zum Standard-Einsatz in Keilriemen basieren im allgemeinen auf folgender Konstruktion. Als Kettfäden werden mit hoher Kettdichte multifile Cordgarne, vor allem aus Polyamid, verwendet, die zwecks guter Haftung mit dem gummielastischen Material durch Dippen in Haftvermittler gummifreundlich ausgerüstet sind. Diese Ausrüstung findet üblicherweise nach dem Weben statt.

Als Schussfäden werden in der Regel mit geringerer Kettdichte Baumwollgarne oder ähnliche Fäden als Verbindungshilfe für die Kettfäden verwendet.

Dieses Gewebe wird mit einer Einbettungsfolie aus Gummi dubliert, d. h. derart belegt, dass ein Verbund aus Gummi und Heftcordgewebe entsteht. Dieser Verbund wird in Platten/Streifen geschnitten, die für die Herstellung eines Riemens um 90 ° gedreht und wieder angeheftet werden, so dass die vorher als Kettfäden in Längsrichtung verlaufenden Cordfäden jetzt in Querrichtung zum Gummi/Heftcordverbund liegen. Diese hinsichtlich der multifilen Cordgarnkettfäden nunmehr quergerichtete Verbundlage wird dann mehrlagig auf eine Trommel aufgewickelt. Der dadurch entstandene Wickel wird zur Bildung der Zugträgerlage mit Zugträgercord umwickelt und mit einer Deckschicht versehen. Dabei kann die Reihenfolge Zugträgerlage-Cordlage auch umgekehrt sein. Nach dem Ausvulkanisieren dieses rohrartigen Gebildes werden einzelne Ringe abgeschnitten, die nach weiteren Behandlungen als Riemen zur Anwendung gelangen.

Für den oben beschriebenen Verfahrensablauf bei der Herstellung eines Riemens hat es sich als nachteilig herausgestellt, dass zum Weben der Heftcord-Gewebelagen die Cordgarne als Kettfäden eingesetzt werden, da dadurch, wie oben beschrieben, eine zusätzliche Verfahrensstufe des Querrichtens durch Drehen um 90 ° notwendig ist. Es hat sich ebenfalls als nachteilig herausgestellt, dass als Mittel zur Verbesserung der Biegesteifigkeit gezwirnte oder cablierte Corde eingesetzt werden, da das Zwirnen und Cablieren eines faser- oder filamentartigen Materials die Biegewilligkeit des Filaments erhöht.

Der Erfindung liegt die Aufgabe zugrunde, einen Kraftübertragungsriemen, insbesondere Breitkeilriemen oder Keilrippenriemen, so zu gestalten, dass einerseits die Herstellung desselben vereinfacht wird und andererseits die Biegesteifigkeit bzw. Quersteifigkeit des Riemens verbessert wird.

Diese Aufgabe wird dadurch gelöst, dass die quer zur Riemenlaufrichtung ausgerichteten Fäden, die aus einem Material mit hoher Festigkeit und relativ hoher Temperaturbeständigkeit bestehen, die Schussfäden bilden und vorzugsweise aus Monofilamenten mit einer hohen Biegesteifigkeit bestehen, während die Fäden der zweiten Gruppe die Kettfäden der Gewebelagen bilden.

Auf diese Weise wird der bisher erforderliche Arbeitsvorgang des Querrichtens der aus gummiartiger Einbettungsfolie und Gewebelage bestehenden Verbundfolie überflüssig, wobei außerdem die Quersteifigkeit (Biegesteifigkeit) des Riemens beträchtlich erhöht wird.

Das erfindungsgemäße Konzept basiert damit auf folgenden Maßnahmen:
Als Schussfäden werden Monofilamente aus Polyamid (zum Beispiel PA 6.6) oder Polyester oder anderen Rohstoffen mit hoher Steifigkeit und hoher Schmelz- oder Erweichungstemperatur über 200 °C verwendet, die ausgeschrumpft und vorzugsweise gummifreundlich ausgerüstet sind, zum Beispiel RFL-gedippt oder mit Isozyanat vorbehandelt und versteift, um eine gute Haftung zu bewirken (RFL = Resorcinol-Formaldehydharz/Latex-Lösung). Die Dicke der Monofilamente liegt vorzugsweise im Bereich von etwa 0,4 bis 1,2 mm; die Schussfadendichte liegt vorzugsweise im Bereich von 10-15 Fäden, vorzugsweise etwa 12 Fäden pro Zentimeter; multifile (RFL- oder ähnlich gedippte) Cordgarne sind ebenfalls für den Einsatz als Schussfäden bei der Herstellung der Gewebelagen geeignet, wenn diese Cordfäden nur eine für Cord niedrige Drehung aufweisen.

Die als Kettfäden fungierenden Fäden dienen als notwendige Verbindungshilfen, so dass eine Kettdichte so gering wie möglich gewählt wird, zum Beispiel im Bereich von 6 Fäden/cm. Diese Kettfäden sind im Riemen in Riemenlaufrichtung ausgerichtet und sollen das Laufverhalten sowie die Profilausformung des Riemens während des Vulkanisationsprozesses nicht stören. Die Kettdichte ist andererseits so hoch auszulegen, dass die Verwebbarkeit (Grundspannung während des Webprozesses) bzw. die Weiterverarbeitung, d. h. das Doublieren auf die gummiartige Einbettungsfolie sichergestellt ist. Während der Verarbeitung, nämlich Vulkanisation und ggf. Zahn- bzw. Profilausformung, sollen die Kettfäden bei den dabei angewandten höheren Temperaturen reißen, erweichen oder schmelzen.

Als Kettfäden können dünne Monofile mit einer Dicke von z. B. 0,2 mm oder gesponnene Garne eingesetzt werden, wobei Baumwollfäden oder ähnliche Garne grundsätzlich geeignet sind. Als Kettfäden werden jedoch Monofile bzw. gesponnene Langfasern auf der Basis von Thermoplasten oder niedrig schmelzenden Duromeren erfindungsgemäß bevorzugt.

Als Rohstoffe dieser schmelzenden bzw. erweichenden Fäden kommen erfindungsgemäß in Betracht:
- Polyolefine (z. B. Polyethylen)
- Polyvinylchlorid (beispielsweise mit dem Handelsnamen Rhovyl)
- Polyvinylidenchlorid (bevorzugt mit dem Handelsnamen Saran)
- Polyamid 11 oder Polyamid 12 (beispielsweise mit dem Handelsnamen Rilsan)

Der Vorteil von Polyvinylchlorid, Polyvinylidenchlorid und ähnlichen Materialien in Keilriemenmischungen ist die hohe Verträglichkeit und teilweise Anbindung dieser Thermoplasten zum vernetzbaren Polymer, z. B. Polyurethan. Als Kettfäden können Garne oder Monofile auf der Basis von Kunststoffen mit einem Schmelzpunkt bzw. einer Glastemperatur bis 170 °C verwendet werden.

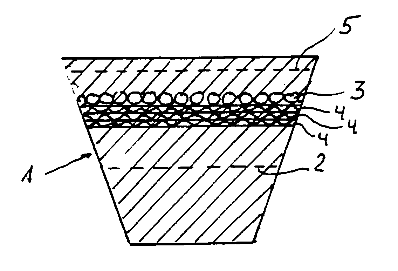

Die Zeichnung zeigt im Querschnitt einen Keilriemen 1, dessen Schmalseite in Laufrichtung des Keilriemens mit einer durch die gestrichelte Linie 2 angedeuteten Zahnung versehen ist und dessen Schrägseiten in die Schrägseiten dieser Zahnung übergehen. Unterhalb einer Zugträgerlage 3 liegen mehrere, zum Beispiel drei auf jeweils eine gummiartige Einbettungsfolie aufgebrachte Gewebelagen 4, deren Schussfäden bevorzugt Monofilamente mit einer hohen Biegesteifigkeit und einer hohen Temperaturbeständigkeit sind und deren Schmelz- oder Erweichungstemperatur größer als 200 °C ist. Die in Riemenlaufrichtung ausgerichteten, beim Weben der Gewebelage die Kettfäden bildenden Fäden sind solche mit einer gegenüber den Schussfäden eine geringere Festigkeit und/oder eine geringere Temperturbeständigkeit aufweisende Fäden oder Garne. Eine Zahnung an der Oberseite des Riemenrückens ist durch die gestrichelte Linie 5 angedeutet.

Das erfindungsgemäße Verfahren zur Herstellung eines Kraftübertragungsriemens, insbesondere Keilriemens, Breitkeilriemens oder Keilrippenriemens, besteht darin, dass als Gewebelage solche Gewebe verwendet werden, bei denen die Schussfäden, aus Monofilamenten, mit hoher Festigkeit und hoher Temperaturbeständigkeit bestehen.

Es können in einer abgewandelten Ausgestaltung der Erfindung auch mindestens eine gummiartige Folie zur Anwendung gelangen, auf die Versteifungselemente in Form von Monofilamenten oder Cordfäden einzeln oder in Gruppen aufgelegt werden und die dann zur Verbesserung der Quersteifigkeit beim Aufbau des Riemen so in das gummielastische Riemenmaterial eingebettet werden, dass diese Versteifungselemente quer zur Riemenlaufrichtung ausgerichtet sind.

## Patentansprüche

1. Kraftübertragungsriemen aus gummi-elastischem Material, in das eine Zugträgerlage und zur Erzielung einer Quersteifigkeit des Riemens mehrere jeweils auf eine gummiartige Einbettungsfolie aufgebrachte oder in eine gummiartige Matrix eingebettete Gewebelagen eingebracht sind, von denen jede aus sich gewebeartig kreuzenden Fäden besteht, wobei eine erste Fadengruppe durch im wesentlichen senkrecht zur Riemenlaufrichtung ausgerichtete Fäden aus einem Material mit hoher Festigkeit, hoher Biegesteifigkeit und hoher Temperaturbeständigkeit gebildet ist, während eine zweite Fadengruppe aus in Riemenlaufrichtung ausgerichteten Fäden aus einem Material mit demgegenüber geringerer Festigkeit und geringerer Temperaturbeständigkeit besteht, **dadurch gekennzeichnet, dass** die Fäden der ersten Fadengruppe die Schussfäden und die Fäden der zweiten Fadengruppe die Kettfäden der Gewebelagen bilden.

2. Kraftübertragungsriemen nach Anspruch 1, **dadurch gekennzeichnet, dass** die Fäden der ersten Fadengruppe Monofilamente mit einer hohen Biegesteifigkeit sind.

3. Kraftübertragungsriemen nach Anspruch 2, **dadurch gekennzeichnet, dass** die Monofilamente aus Polyamid, zum Beispiel PA 6.6, oder Polyester oder anderen Stoffen mit hoher Steifigkeit und Schmelz- oder Erweichungstemperatur über 200 °C bestehen.

4. Kraftübertragungsriemen nach Anspruch 2 oder 3, **dadurch gekennzeichnet, dass** die Monofilamente ausgeschrumpft und insbesondere durch Dippen in RFL oder mit Isocyanat behandelt und versteift sind.

5. Kraftübertragungsriemen nach Anspruch 4, **dadurch gekennzeichnet, dass** die Monofilamente eine Dicke im Bereich von 0,45 - 0,9 mm haben.

6. Kraftübertragungsriemen nach Anspruch 1, **dadurch gekennzeichnet, dass** die Fäden der ersten Gruppe multifile nur eine geringe Drehung aufweisende Cordgarne aus cablierten oder gezwirnten Einzelfäden aus vorzugsweise Polyamid oder Polyester sind.

7. Kraftübertragungsriemen nach Anspruch 6, **dadurch gekennzeichnet, dass** die multifilen Cordgarne mit einem Haftvermittler ausgerüstet sind, vorzugsweise durch Dippen in RFL.

8. Kraftübertragungsriemen nach einem der Ansprüche 1-7, **dadurch gekennzeichnet, dass** die Schussfäden mit einer hohen Schussdichte im Bereich von 10-14 Fäden, vorzugsweise etwa 12 Fäden, pro Zentimeter mit den Kettfäden verwebt sind.

9. Kraftübertragungsriemen nach einem der Ansprüche 1-8, **dadurch gekennzeichnet, dass** die Kettfäden in einer Kettdichte im Bereich von 4-8 Fäden, vorzugsweise etwa 6 Fäden, pro Zentimeter mit den Schussfäden verwebt sind.

10. Kraftübertragungsriemen nach Anspruch 9, **dadurch gekennzeichnet, dass** die Kettfäden Monofilamente mit einer Dicke im Bereich von 0,1 - 0,3 mm sind.

11. Kraftübertragungsriemen nach Anspruch 10, **dadurch gekennzeichnet, dass** die Kettfäden Monofilamente oder gesponnene Langfasern auf der Basis von Thermoplasten sind.

12. Kraftübertragungsriemen nach Anspruch 11, **dadurch gekennzeichnet, dass** als Rohstoffe für die Kettfäden Materialien aus der Gruppe von Polyolefinen, z. B. Polyethylen, Polyvinylchlorid, Polyvinylidenchlorid oder Polyamid 11 oder Polyamid 12 (Handelsname z. B. Wilsan) sind.

13. Kraftübertragungsriemen nach einem der Ansprüche 1-12, **dadurch gekennzeichnet, dass** er als Kraftübertragungsband ausgebildet ist.

14. Kraftübertragungsriemen nach einem der Ansprüche 1 - 12, **dadurch gekennzeichnet, dass** er als Keilriemen, insbesondere Keilrippenriemen, ausgebildet ist.

15. Kraftübertragungsriemen nach Anspruch 14, **dadurch gekennzeichnet, dass** er als flankenoffener Keilriemen ausgebildet ist und die Enden der Schussfäden bis zu den Aussenseiten der Riemenflächen reichen.

16. Kraftübertragungsrimen nach einem der Ansprüche 1-15, **dadurch gekennzeichnet, dass** er bis zu acht oder mehr Gewebeeinlagen enthält.

17. Verfahren zur Herstellung eines Kraftübertragungsriemens aus gummielastischem Material nach einem der Ansprüche 1-16, **dadurch gekennzeichnet, dass** man für jede Gewebelage ein Gewebe verwendet, deren Schussfäden aus einem Material mit hoher Festigkeit, hoher Biegesteifigkeit und hoher Temperaturbeständigkeit besteht und dessen Kettfäden aus einem Material mit demgegenüber geringerer Festigkeit und geringerer Zugfestigkeit besteht.

18. Verfahren zur Herstellung eines Kraftübertragungsriemens aus gummielastischem Material, bei welchem Verfahren man in das gummielastische Material im zuge eines Vulkanisierprozesses eine Zugträgerlage und mindestens eine Lage von sich quer zur Riemenlaufrichtung erstreckenden Versteifungselementen einbettet, **dadurch gekennzeichnet, dass** man für jede Versteifungselementlage in einem vorbereitenden Schritt diese Versteifungselemente in Form von Monufilamenten oder Cordfäden mit geringer Drehung einzeln oder in Gruppen auf eine gummiartige Trägersubstanz auflegt und dieses aus gummiartiger Trägersubstanz und aufgelegten Versteifungselement bestehende Verbundelement in einer oder mehreren Lagen in das gummielastische Riemenmaterial einbettet.
